# EUROPEAN PATENT SPECIFICATION

(11) **EP 0 442 164 B1**
(45) Date of publication and mention of the grant of the patent: **28.07.1993**
(21) Application number: 90203481.8
(22) Date of filing: 20.12.1990
(51) Int. Cl.: B01J 8/02, C01B 3/38

(54) **Fixed bed reactor**
Festbettreaktor
Réacteur à lit fixe

(30) Priority: 10.01.1990 GB 9000528
(43) Date of publication of application: 21.08.1991
(73) Proprietor: SHELL INTERNATIONALE RESEARCH MAATSCHAPPIJ B.V., 2596 HR Den Haag (NL)
(72) Inventor: Sie, Swan Tiong, NL-1031 CM Amsterdam (NL)

(56) References cited:
- US-A- 1 987 904
- US-A- 2 108 069
- US-A- 2 108 087
- US-A- 2 942 958
- US-A- 3 477 824

## Description

The present invention relates to a fixed bed reactor for carrying out processes at very high temperatures and high space velocities, e.g. a catalytic partial oxidation process of a hydrocarbonaceous feedstock, or a catalytic treatment of the product gas from a non-catalytic partial oxidation of a hydrocarbonaceous feedstock.

Catalytic partial oxidation of natural gas is an attractive route for producing synthesis gas for further conversion to hydrocarbons or methanol. In this process a mixture of natural gas and an oxygen-containing gas (e.g. oxygen, air or steam-diluted oxygen) is passed over a suitable catalyst at elevated temperature. The ideal process would operate at very high temperatures (above 1000 °C for thermodynamic reasons) and at elevated pressure (30 bar and higher) and very high space velocities (e.g. 100,000 Nl/l.h.). At these very high space velocities pressure drop becomes an important factor. It has already been proposed to use a reactor in which the catalyst is in the form of a monolith (honeycomb) which features a low pressure drop at the very high space velocities applied. Although this reactor concept is an attractive one, it will not be easy to scale it up to very large sizes. Fabrication of monoliths of very large size may require further developments in ceramics fabrication technology while the positioning and fixing of the monoliths in the reactor space has to meet the demands on mechanical and thermal stresses. At very high temperatures, where normal metals may no longer be used and at very large scales this is not an easy matter. Monoliths known at present are made mostly of cordierite, which under practical conditions cannot be used anymore above some 1100 °C while ideally one would like a catalytic system operable up to some 1300 °C.

The use of a fixed bed of catalyst particles in principle allows more freedom of choice between heat-resistant catalyst support materials. However, to avoid unduly high pressure drops, one has to resort to shallow beds. An example is a shallow bed in a spherical reactor, which however implied rather poor use of the reactor space. Other examples are cylindrical reactors in which the reactant flows laterally instead of longitudinally, e.g. a flat bed parallel to the central axis or a radial flow reactor. Such shallow beds imply a large cross-sectional area. To properly support such very wide beds using constructional materials which can resist temperatures of the order of 1200 °C is not easy, however.

In non-catalytic processes for making synthesis gas, a hydrocarbon feedstock such as natural gas or heavy oil is partially oxidized in a burner placed inside a pressure vessel. Well-known processes of this type are the Texaco partial oxidation process and the Shell Gasification Process (SGP). The oxidation reactions take place non-catalytically in the flame zone at very high temperature, typically some 1800 °C. The reaction gas leaving the partial oxidation vessel typically has a temperature of 1200 °C and higher and is cooled down in a waste heat boiler. Higher yields of synthesis gas may be obtained by contacting the gas with a catalyst to allow endothermic reactions to occur between unconverted hydrocarbons and steam and/or carbon dioxide (which are present as products of combustion or added to the feed as moderating agents). In addition to the enhanced process efficiency by the improved synthesis gas yields, this catalytic treatment also has the advantage that synthesis gas with a more optimum H₂/CO ratio may be produced for synthesis of hydrocarbons or methanol and that it allows simultaneous removal of contaminants in the product gas of the non-catalytic partial oxidation process (e.g. HCN, carbonaceous compounds, etc.). However, a problem is that the catalytic treatment, like in the previous application, has to be done at a high temperature level (in the range 1000-1400 °C) with very low pressure drop. Known catalytic reactors when used for this purpose have similar problems as mentioned above.

It is an object of the invention to provide a fixed bed reactor with low pressure drop suitable for operation at very high temperatures which avoids these problems.

It is another object of the invention to provide such a reactor having a simple construction from heat resistant components and possibilities for scaling up.

The invention therefore provides a reactor for carrying out a catalytic partial oxidation process of a hydrocarbonaceous feedstock or a catalytic treatment of the product gas from a non-catalytic partial oxidation of a hydrocarbonaceous feedstock, comprising means for providing a mixture of hydrocarbonaceous feedstock, oxygen-containing gas and, optionally, steam or the product gas resulting from non-catalytic reaction of this mixture to a catalytic reaction zone and means for discharging the product gas, comprising a first arrangement of parallel inlet tubes in a fixed catalyst bed in order to supply the feed to within the bed and a second arrangement of parallel outlet tubes in order to withdraw the product from the bed, wherein the tubes are closed at their one end and have openings to allow passage of reactant or product, but not of catalyst particles and wherein the feed passes the catalyst bed in a transverse direction from inlet tube to outlet tube, characterized in that the first and second arrangements of tubes are positioned by the catalyst bed itself, after the reactor has been filled, and not by means of tube sheets.

It is remarked that US-A-2,108,087 discloses a reactor as described above before "characterized in that".

However, US-A-2,108,087 only discloses a tube arrangement supported by tube sheets (5, 6) in a reactor for relatively low temperatures and does not suggest a solution for high temperature problems.

When high temperatures are applied, reactor problems will arise due to mechanical and thermal stresses. At such very high temperatures "normal" metals and "normal" mechanical connections in the reactor can no longer be used in a suitable manner.

In particular, at such high temperatures tube sheets mechanically connected to the tubes can not be used due to the above-mentioned high temperature problems (mechanical and thermal stresses in the reactor).

The present invention now provides a reactor design which allows use of heat-resistant components whilst coping with mechanical and thermal stresses even at a large scale.

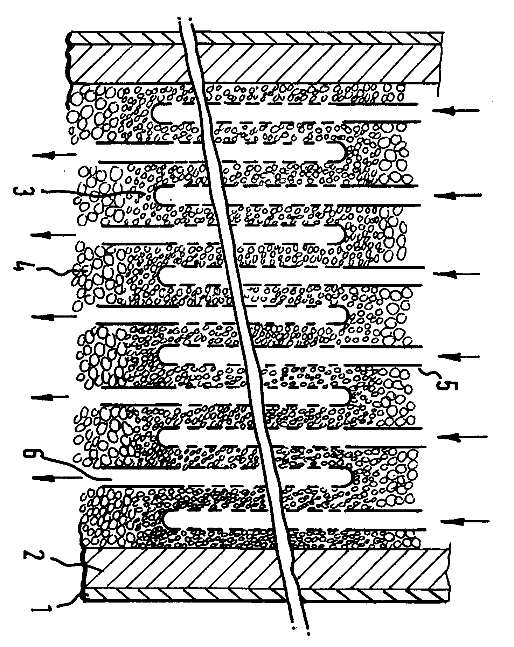

The invention will now be described in more detail by way of example by reference to the accompanying drawing, in which the figure represents a partial transverse section of a low pressure drop, high temperature fixed bed reactor of the invention.

Referring now to the figure, a reactor having a (steel) wall 1 is shown. The (steel) wall 1 has been provided with any insulation 2 suitable for the purpose. The reactor is advantageously cylindrical.

A fixed catalyst bed 3 is present within the reactor. The manner in which a fixed bed can be maintained in a reactor, is known to those skilled in the art and will not be described in detail. Further coarse ceramic packing 4 is present.

In the fixed bed a first set of parallel inlet tubes 5 is present to supply the feed to within the bed. A second set of parallel outlet tubes 6 is present to withdraw the product from the bed. In the figure the said first set consists of six inlet tubes whereas the said second set consists of five outlet tubes.

However, it will be appreciated that any number of tubes suitable for the purpose can be applied.

The tubes are closed at one end and have openings to allow passage of reactant or product, but not of catalyst particles. The feed passes the catalyst bed in a transverse direction from inlet tube to outlet tube. These openings can be slits (e.g. made by sawing) or small holes (e.g. made by drilling). The tubes may be made of heat-resistant (ceramic) material such as alumina or silicon carbide. If the length required exceeds the possibilities of the fabrication technology, they can be made up from sections jointed together with a rather loose joint. Such a jointed tube may have the additional advantage of being less vulnerable to breakage as a result from thermal workings of the catalyst bed.

The positioning of the tubes inside the bed may involve the use of spacers, e.g. in the form of ceramic rings which keeps the tubes apart at appropriate distances. However, it may well be possible to rely on the catalyst bed itself to position the tubes. In the latter case one only has to ensure a temporary fixing of the tubes during the filling operation.

Particularly in the latter case the construction of the reactor would seem to be very simple and may result in a cheap system. The scaling up capability of this type of reactor is very good.

In an advantageous embodiment of the invention the tubes have a total length of 3 m (made up from sections of 1 m), an outer diameter of 5 cm and an inner diameter of 4 cm, whereas the reactor has a length of 4 m and a diameter of 2 m. Advantageously the slits or the small holes have the following dimensions: 1 mm width, 2 cm length, or 2 mm diameter.

The inlet as well as the outlet tubes can be arranged advantageously in a regular pattern, e.g. a square or triangular array with a pitch of 5-15 cm. The array of outlet tubes is such, that each outlet tube is in the centre of the squares or triangles formed by the centres of the neighbouring inlet tube. The space between the tubes is filled with catalyst of suitable form, e.g. spheres of 2.5 - 4 mm, extrudates of 1.0 - 3.0 mm diameter and 2 - 6 mm length.

Various modifications of the invention will become apparent to those skilled in the art from the foregoing description and accompanying drawings. Such modifications are intended to fall within the scope of the appended claims.

## Claims

1. A reactor for carrying out a catalytic partial oxidation process of a hydrocarbonaceous feedstock or a catalytic treatment of the product gas from a non-catalytic partial oxidation of a hydrocarbonaceous feedstock, comprising means for providing a mixture of hydrocarbonaceous feedstock, oxygen-containing gas and, optionally, steam or the product gas resulting from non-catalytic reaction of this mixture to a catalytic reaction zone and means for discharging the product gas, comprising a first arrangement of parallel inlet tubes in a fixed catalyst bed in order to supply the feed to within the bed and a second arrangement of parallel outlet tubes in order to withdraw the product from the bed, wherein the tubes are closed at their one end and have openings to allow passage of reactant or product, but not of catalyst particles and wherein the feed passes the catalyst bed in a transverse direction from inlet tube to outlet tube, characterized in that the first and second arrangements of tubes are positioned by the catalyst bed itself, after the reactor has been filled, and not by means of tube sheets.

2. The reactor as claimed in claim 1 characterized in that the reactor is cylindrical.

3. The reactor as claimed in claim 1 or 2 characterized in that the openings are slits.

4. The reactor as claimed in claims 1 or 2 characterized in that the openings are small holes.

5. The reactor as claimed in any one of claims 1-4 characterized in that the tubes are made of heat-resistant material.

6. The reactor as claimed in claim 5 characterized in that the tubes are made of alumina.

7. The reactor as claimed in claim 5 characterized in that the tubes are made of silicon carbide.

8. The reactor as claimed in any one of claims 1-7 characterized in that the tubes are made up from sections jointed together with a loose joint.

9. The reactor as claimed in any one of claims 1-8 characterized in that the tubes are positioned inside the fixed bed by spacers.

10. The reactor as claimed in claim 9 characterized in that the spacers are ceramic rings.

## Patentansprüche

1. Reaktor zum Ausführen eines katalytischen Teiloxidationsprozesses eines kohlenwasserstoffhaltigen Ausgangsmaterials oder einer katalytischen Behandlung des Produktgases einer nichtkatalytischen Teiloxidation eines kohlenwasserstoffhaltigen Ausgangsmaterials, umfassend eine Einrichtung zum Liefern eines Gemisches aus kohlenwasserstoffhaltigem Ausgangsmaterial, Sauerstoff enthaltendem Gas und, wahlweise,Dampf oder dem Produktgas, welches sich aus einer nichtkatalytischen Reaktion dieses Gemisches ergibt, zu einer katalytischen Reaktionszone, und eine Einrichtung zum Abgeben des Produktgases, die eine erste Anordnung von parallelen Einlaßrohren in einem Festkörper-Katalysatorbett, um die Zufuhr in das Bett zu liefern, und eine zweite Anordnung von parallelen Auslaßrohren, um das Produkt aus dem Bett abzuziehen, wobei die Rohre an ihrem einen Ende geschlossen sind und Öffnungen haben, um den Durchgang des Reaktionsteilnehmers bzw. des Produktes, nicht jedoch von Katalysatorteilchen, zu ermöglichen, und wobei die Zufuhr durch das Katalysatorbett in Querrichtung von einem Einlaßrohr zu einem Auslaßrohr hindurchgeht,
dadurch gekennzeichnet,
daß die erste und die zweite Anordnung von Rohren durch das Katalysatorbett selbst positioniert sind, nachdem der Reaktor gefüllt worden ist, und nicht mittels Rohrblechen.

2. Reaktor nach Anspruch 1, dadurch gekennzeichnet, daß der Reaktor zylindrisch ist.

3. Reaktor nach Anspruch 1 oder 2, dadurch gekennzeichnet, daß die Öffnungen Schlitze sind.

4. Reaktor nach den Ansprüchen 1 oder 2, dadurch gekennzeichnet, daß die Öffnungen kleine Löcher sind.

5. Reaktor nach irgendeinem der Ansprüche 1 bis 4, dadurch gekennzeichnet, daß die Rohre aus hitzebeständigem Material gebildet sind.

6. Reaktor nach Anspruch 5, dadurch gekennzeichnet, daß die Rohre aus Aluminiumoxid gebildet sind.

7. Reaktor nach Anspruch 5, dadurch gekennzeichnet, daß die Rohre aus Siliciumcarbid gebildet sind.

8. Reaktor nach irgendeinem der Ansprüche 1 bis 7, dadurch gekennzeichnet, daß die Rohre aus Abschnitten gebildet sind, die mit einer losen Verbindung miteinander verbunden sind.

9. Reaktor nach irgendeinem der Ansprüche 1 bis 8, dadurch gekennzeichnet, daß die Rohre mittels Abstandsteilen in dem Festkörperbett positioniert sind.

10. Reaktor nach Anspruch 9, dadurch gekennzeichnet, daß die Abstandsteile Keramikringe sind.

## Revendications

1. Un réacteur pour la mise en oeuvre d'un procédé d'oxydation partielle catalytique d'une charge de départ à base d'hydrocarbures ou d'un traitement catalytique d'un produit gazeux à partir d'une oxydation partielle non-catalytique d'une charge de départ à base d'hydrocarbures, comportant des moyens pour fournir un mélange de charges de départ à base d'hydrocarbures, un gaz renfermant de l'oxygène et, facultativement, de la vapeur ou le produit gazeux résultant d'une réaction non-catalytique de ce mélange à une zone de réaction catalytique, et des moyens pour évacuer le produit gazeux comportant un premier agencement de tubes d'entrée parallèles dans un lit catalytique fixe afin de transférer la charge à l'intérieur du lit, et un second agencement de tubes de sortie parallèle afin d'évacuer le produit du lit, réacteur dans lequel les tubes sont fermés à l'une de leurs extrémités et présentent des ouvertures pour permettre le passage du réactif ou du produit, mais pas des particules catalytiques et dans lequel la charge traverse le lit de catalyseur selon une direction transversale à partir du tube d'entrée vers le tube de sortie, caractérisé en ce que les premier et second agencements de tubes sont positionnés par le lit catalytique lui-même, une fois que le réacteur a été rempli et non au moyen de plaques tubulaires.

2. Le réacteur tel que revendiqué dans la revendication 1, caractérisé en ce que ce réacteur est cylindrique.

3. Le réacteur tel que revendiqué dans la revendication 1 ou 2, caractérisé en ce que les ouvertures sont des fentes.

4. Le réacteur tel que revendiqué dans la revendication 1 ou 2, caractérisé en ce que les ouvertures sont de petits trous.

5. Le réacteur tel que revendiqué dans l'une quelconque des revendications 1 à 4, caractérisé en ce que les tubes sont réalisés en matériau résistant à la chaleur.

6. Le réacteur tel que revendiqué dans la revendication 5, caractérisé en ce que les tubes sont réalisés en alumine.

7. Le réacteur tel que revendiqué dans la revendication 5, caractérisé en ce que les tubes sont réalisés en carbure de silicium.

8. Le réacteur tel que revendiqué dans l'une quelconque des revendications 1 à 7, caractérisé en ce que les tubes sont réalisés à partir de sections articulées ensemble au moyen d'un joint lâche.

9. Le réacteur tel que revendiqué dans l'une quelconque des revendications 1 à 8, caractérisé en ce que les tubes sont positionnés à l'intérieur du lit fixe au moyen d'entretoises.

10. Le réacteur tel que revendiqué dans la revendication 9, caractérisé en ce que les entretoises sont des bagues céramiques.
